# FASCICULE DE BREVET EUROPEEN

(11) **EP 2 322 432 B1**
(45) Date de publication et mention de la délivrance du brevet: **20.03.2013**
(21) Numéro de dépôt: 10190513.1
(22) Date de dépôt: 09.11.2010
(51) Int. Cl.: B64F 1/18, G05D 1/06, G08G 5/00, G08G 5/02

(54) **Dispositif d'aide a la décision d'appontage d'un aéronef sur un navire**
Hilfsvorrichtung für die Entscheidungsfindung bei der Landung eines Flugzeugs auf einem Schiff
Device for assisting in the decision to land an aircraft on a ship

(30) Priorité: 13.11.2009 FR 0905470
(43) Date de publication de la demande: 18.05.2011
(73) Titulaire: Thales, 92200 Neuilly Sur Seine (FR)
(72) Inventeur: Geoffroy, Rémi, 33600 Pessac (FR); Garrec, Patrick, 33700, MERIGNAC (FR); Thiry, Yannick, 33380, BIGANOS (FR); Cazaux, Patrick, 33290, LE PIAN MEDOC (FR)
(74) Mandataire: Bréda, Jean-Marc

(56) Documents cités:
- DE-A1-102007 050 246
- US-A1- 2007 021 878
- US-A1- 2008 071 431

## Description

La présente invention concerne le domaine des dispositifs de surveillance et de contrôle d'un aéronef à voilure tournante prêt à apponter sur un véhicule mobile tel qu'un navire. Plus particulièrement, l'invention se rapporte aux dispositifs synthétisant un certains nombre de paramètres relatifs aux conditions d'atterrissage permettant d'assister un opérateur en fournissant une aide à la décision.

Généralement, les missions de contrôle et de surveillance des aéronefs sans pilote peuvent être de différentes natures. Notamment, elles peuvent concerner le contrôle des phases de décollage ou d'atterrissage ou encore le contrôle du suivi du plan de vol lors de la navigation d'un tel aéronef.

Un opérateur dispose usuellement d'un système d'affichage lui permettant de contrôler le comportement de l'aéronef. Ce système permet à l'opérateur de prendre des décisions telles qu'une décision d'annulation de mission ou, si besoin est, une décision d'autorisation d'atterrissage ou encore une poursuite de la mission.

Au cours des phases de décollage ou d'atterrissage, l'opérateur doit être réactif. En cas d'incidents, la mission doit être rapidement interrompue afin de sécuriser dans un premier temps le personnel à bord à proximité de la zone d'atterrissage et dans un second temps, l'appareil lui-même.

Lorsque la zone d'atterrissage ou de décollage est mobile, un inconvénient né de la difficulté de prendre des décisions rapidement pour autoriser les manoeuvres d'un aéronef contrôlé à distance tout en garantissant une sécurité maximale aux alentours.

Typiquement, lorsque l'atterrissage a lieu sur un navire, la houle, le vent et les mouvements verticaux de l'aéronef et du navire peuvent comporter des risques dans l'exécution des manoeuvres.

La demande US 2007/0021878 décrit un système de contrôle permettant de déterminer la position et la vitesse relative d'un aéronef par rapport à un navire. Cependant, ce document n'aborde pas le problème de l'aide à l'appontage. Or, un appontage est une manoeuvre impliquant de nombreux risques, notamment des risques humains pour le personnel sur le navire et des risques matériels que ce soient l'aéronef ou le navire en cas de collision issue d'un échec de l'appontage.

Une autorisation d'appontage peut être donnée seulement si tous les critères de sécurité sont respectés. Les critères sont fixés en fonction de chaque aéronef et de chaque navire. Ils peuvent être par exemple les suivants :
■ la zone d'appontage est dégagée ;
■ les attitudes de l'aéronef et du navire sont dans les limites, notamment le lacet, le roulis, le tangage, et la vitesse ;
■ l'amplitude de la houle n'excède pas une certaine limite ;
■ le vent sur le pont est favorable, notamment en ce qui concerne son intensité et sa direction.

Ces limites sont établies d'une part en fonction des caractéristiques physiques des aéronefs notamment de leur puissance et de leur poids et d'autre part en fonction des capacités du navire, notamment de sa taille et de la hauteur du pont. Enfin ces limites sont établies pour différentes directions de vent et différentes amplitudes de la houle.

L'ensemble de ces limites est établi pour un couple donné d'aéronef et de navire.

La séquence d'un atterrissage d'un aéronef à voilure tournante n'est pas linéaire, contrairement à la séquence d'un atterrissage d'un aéronef à voilure fixe. Notamment, on entend par séquence linéaire, le fait qu'un atterrissage d'un aéronef à voilure tournante est lié à une durée pendant laquelle des conditions d'appontage favorables sont requises. Dans l'atterrissage d'aéronef à voilure fixe, une autorisation est donnée et elle reste valable à partir du moment où l'autorisation est donnée.

Concernant l'aéronef à voilure fixe, l'aéronef initie son appontage. Un point de décision permet de vérifier avant ce point que si toutes les conditions d'appontage sont réunies alors l'aéronef continue sa séquence d'appontage sinon il effectue une procédure de dégagement, c'est-à-dire qu'il annule l'appontage.

En effet, la séquence d'appontage est généralement la suivante :
■ l'aéronef se présente près du pont afin d'initier l'appontage ;
■ il rejoint ensuite une position au-dessus du pont située entre 10 à 20 mètres à l'arrière du pont ;
■ une fois cette position rejointe, il lui est possible d'apponter si les conditions requises sont réunies ;
■ si ces conditions ne sont pas satisfaites, l'aéronef entame alors une phase d'attente en vol stationnaire ;
■ une fois que les conditions requises sont vérifiés, il est autorisé à apponter.

En outre, la décision d'apponter, suite à une phase de vol stationnaire, n'est pas automatique. Elle est réalisée après une validation d'un opérateur qui est sur le navire.

L'opérateur doit donc connaître en temps réel la validité ou non de chacune des conditions requises afin d'autoriser l'appontage et ainsi terminer la phase de vol stationnaire au-dessus du navire.

Un problème rencontré dans cette configuration est que l'étape de vol stationnaire est considérée comme une étape à risques, l'aéronef se trouvant au-dessus du navire donc dans une zone proche d'une infrastructure regroupant du personnel et étant de plus dans une aérologie perturbée par le navire.

En conséquence, il est essentiel de limiter la durée de l'attente de l'aéronef lorsqu'il est en vol stationnaire dans une situation prêt à apponter. L'opérateur a donc la responsabilité d'autoriser l'appontage dès qu'une opportunité se présente tout en assurant un niveau de sécurité maximal. Si l'opérateur manque un créneau où les conditions sont réunies, il doit attendre un prochain créneau. Un problème est que le prochain créneau où l'appontage sera possible peut se présenter que quelques minutes plus tard pour réunir les conditions favorables à l'appontage selon l'évolution de ces conditions.

Actuellement, l'opérateur est seul à évaluer un certain nombre de paramètres permettant d'autoriser ou pas l'appontage d'un aéronef. Aucun dispositif ne permet de faciliter une aide à la décision pour l'opérateur notamment un dispositif qui permettrait de soulager la tâche de l'opérateur.

En particulier, l'appontage d'un aéronef à voilure tournante sur un véhicule mobile tel qu'un navire est pour l'instant une opération à risques.

Actuellement, l'opérateur sur le navire est contraint d'évaluer le respect ou non de chacun des critères favorables ou non à l'appontage à chacun des instants « t ». Lorsque tous les critères sont réunis pour autoriser un appontage, l'opérateur peut autoriser un appontage en actionnant une commande qui permet de donner un feu vert à l'aéronef. L'aéronef peut alors dérouler une procédure d'appontage sur le navire.

Si les critères sont mal jugés par l'opérateur par faute de temps ou à cause d'une erreur d'évaluation humaine, un risque peut survenir lors de l'appontage. En revanche, si l'opérateur décide d'attendre des créneaux où les conditions sont réunies pour autoriser un appontage, il peut être pris de court et ne pas avoir le temps d'acquitter la situation pour transmettre à l'aéronef une consigne d'appontage. Un risque alors est de maintenir l'aéronef en vol stationnaire dans des conditions qui peuvent causer un risque supplémentaire.

Un inconvénient dans ce dernier cas est d'augmenter le temps de vol stationnaire de l'aéronef au-dessus du navire et d'augmenter les risques d'un accident lorsque les conditions météorologiques sont par exemples fluctuantes. Il est même possible que l'aéronef quitte sa situation de vol stationnaire et reparte pour recommencer une approche ou trouver une autre solution.

Un but de l'invention est de pallier les inconvénients précités.

L'invention, selon la revendication 1, permet d'optimiser l'aide à la décision pour un opérateur devant autoriser ou non l'appontage d'un aéronef sur un véhicule mobile. L'invention permet le contrôle d'un certain nombre de critères afin de déterminer des fenêtres temporelles prédictives pendant lesquelles un appontage de l'aéronef peut être autorisé. Les fenêtres sont générées par un calculateur, elle donne un état des conditions favorables ou non pour autoriser un appontage dans un futur proche.

Le dispositif d'aide à l'appontage d'un aéronef, l'aéronef étant contrôlé à distance à partir d'une station mobile, appelée navire, comprend des moyens de réception de données provenant de l'aéronef, notamment des attitudes de l'aéronef, l'aéronef étant en vol stationnaire prêt à apponter, la décision d'appontage devant être prise sous certaines conditions devant être réunies, les conditions comprenant un premier ensemble de critères prédictifs et un second ensemble de critères non prédictifs.

Le dispositif comprend un calculateur permettant de délivrer au moins un indicateur temporel indiquant que les critères prédictifs sont favorables ou non à un appontage, et un afficheur permettant de représenter l'indicateur dans un premier état lorsque les critères prédictifs sont favorables.

Avantageusement, le dispositif comprend des moyens d'acquittement permettant à un opérateur d'acquitter les critères non prédictifs, l'indicateur temporel généré préalablement par le calculateur étant représenté dans un second état lorsque l'opérateur acquitte les critères non prédictifs.

Avantageusement, l'indicateur temporel comprend au moins une fenêtre défilant sur une jauge graduée dans le temps.

Avantageusement, une limite temporelle est définie de telle manière qu'une fenêtre glissant au-delà de cette limite temporelle et dont le temps restant de la fenêtre ne permet plus l'appontage de l'aéronef ne permet plus à l'opérateur d'acquitter les critères non prédictifs pour cette fenêtre.

Avantageusement, l'indicateur temporel est représenté dans un troisième état lorsque la fenêtre franchie la limite temporelle alors que l'opérateur a acquitté les critères non prédictifs.

Avantageusement, l'indicateur temporel est représenté dans un quatrième état lorsque la fenêtre franchie la limite temporelle alors que l'opérateur n'a pas acquitté les critères non prédictifs.

Avantageusement, les critères prédictifs comprennent une valeur correspondant au dépassement d'au moins un écart maximal autorisé d'une attitude du navire.

Avantageusement, les critères prédictifs comprennent une valeur correspondant au dépassement d'au moins un écart maximal autorisé d'une attitude de l'aéronef.

Avantageusement, les critères prédictifs comprennent une valeur correspondant au dépassement d'un écart maximal autorisé de l'amplitude de la houle.

Avantageusement, les critères prédictifs comprennent une valeur correspondant au dépassement d'un écart maximal autorisé de l'intensité du vent au niveau du pont.

Avantageusement, les critères prédictifs comprennent une valeur correspondant à la direction du vent au niveau du pont.

Avantageusement, les critères non prédictifs comprennent le constat que la zone du pont est dégagée.

Avantageusement, l'aéronef comprend des moyens de réception des données générées par le calculateur du navire et des moyens d'affichage permettant d'afficher l'indicateur temporel.

D'autres caractéristiques et avantages de l'invention apparaîtront à l'aide de la description qui suit, faite en regard des dessins annexés qui représentent :
- la figure 1 : une configuration de vol stationnaire d'un aéronef au dessus d'un navire dans laquelle l'invention s'applique ;
- la figure 2 : une fenêtre prédictive d'appontage selon l'invention;
- la figure 3A : l'apparition de deux fenêtres d'appontage dans un premier état ;
- la figure 3B : les deux fenêtres d'appontage dans un second état ;
- la figure 3C : les deux fenêtres d'appontage dans un second et un quatrième état ;
- la figure 3D : une fenêtre d'appontage dans un troisième état ;

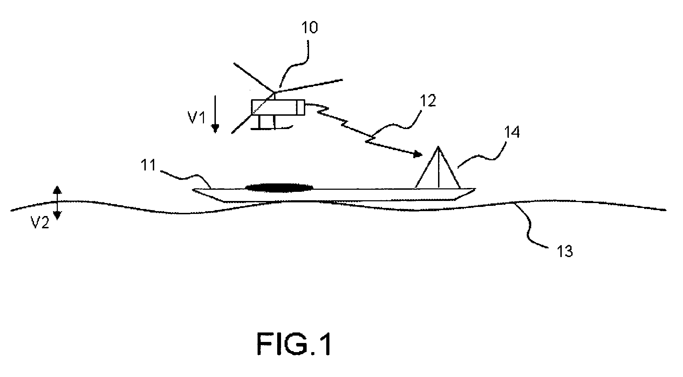

La figure 1 représente une configuration dans laquelle l'invention s'applique. Il s'agit d'un cas figure où un aéronef 10 est en vol stationnaire au dessus du navire. L'aéronef, contrôlé en partie à distance, entreprendra un scénario d'appontage sur le navire si et seulement si une autorisation lui est donnée d'apponter.

L'aéronef 10, en vol stationnaire attend une consigne qui peut être par exemple un acquittement d'une requête d'appontage envoyée à la tour de contrôle 14 du navire 11.

Dans la figure 1, l'aéronef 10 est en vol stationnaire, en position prêt à apponter. La tour de contrôle 14 reçoit des informations provenant de l'aéronef 10, notamment quant à sa vitesse verticale V1, sa dynamique tels que ses attitudes et certaines conditions de vol. L'opérateur doit pouvoir contrôler un certain nombre de critères liés à l'aéronef ou indépendants de l'aéronef afin d'autoriser ou de refuser l'appontage. En cas de refus, l'aéronef se maintient en vol stationnaire au dessus du navire en attendant une prochaine autorisation.

L'opérateur doit fournir une consigne à l'aéronef permettant de débuter l'appontage ou non. L'appontage comprend la descente de l'aéronef 10 au dessus du pont du navire 11 puis l'atterrissage à proprement dit lorsque l'aéronef 10 se pose sur le navire 11 jusqu'à se stabiliser.

L'opérateur, qui donne la consigne d'appontage, doit s'assurer d'un certain nombre de critères favorables pour valider la consigne autorisant l'aéronef à apponter. Une solution de l'invention vise à fournir à l'opérateur, par l'intermédiaire d'un afficheur, un indicateur prédictif lui proposant des fenêtres temporelles, également appelées fenêtres d'appontage, durant lesquelles des critères prédictifs sont favorables à l'appontage.

Les critères prédictifs sont notamment les attitudes de l'aéronef et du navire tels que le lacet, le roulis et le tangage, l'amplitude et la vitesse de la houle, l'intensité et la direction du vent sur le pont. Ces critères correspondent à des paramètres mesurables par un calculateur et dont la valeur peut être extrapolées dans un futur proche.

L'extrapolation peut se faire par la connaissance de conditions initiales ou courantes et par l'application par le calculateur de modèles connus. Par exemple, les évolutions de la météo ou de la houle dans un futur proche peuvent être extrapolées selon des modèles.

La dynamique de l'aéronef ainsi que celle du navire peuvent être prédites également dans un futur proche à partir de conditions initiales connues.

D'autres critères, dits critères non prédictifs, comme la vérification que le pont est dégagé ne peuvent être pris en compte par un calculateur.

L'invention permet de disposer pour l'opérateur de moyens pour acquitter ces critères. Ils sont alors acquittés manuellement par l'opérateur. L'invention permet de vérifier que si un indicateur prédictif est favorable à l'appontage et que l'opérateur acquitte les critères non prédictifs, alors une autorisation d'appontage est validée et est envoyée à l'aéronef.

Un mode de réalisation de l'invention permet de définir plusieurs états de l'indicateur prédictif de manière à indiquer graphiquement sur cet indicateur si l'acquittement de l'opérateur a été pris en compte ou non.

L'indicateur prédictif comprend plusieurs états selon si les critères prédictifs ou non prédictifs sont favorables à l'appontage et selon les actions d'un opérateur. L'indicateur prédictif regroupe à la fois l'évaluation des critères prédictifs réalisée par le calculateur et l'évaluation des critères non-prédictifs réalisée par l'opérateur. La combinaison de ces deux évaluations conduit à un indicateur prédictif à quatre états distincts.

Chaque état comprend une représentation qui permet à l'opérateur de connaître le statut de l'ensemble des critères nécessaires à l'appontage.

Un premier état permet de signaler que seuls les critères prédictifs sont favorables à l'appontage.

Un second état permettant de signaler que les critères non prédictifs sont favorables à l'appontage, suite à un acquittement de l'opérateur.

Ce second état permet à un opérateur, qui aurait acquitté en avance les critères non prédictifs, de savoir que les fenêtres d'appontage qui arrivent ont pris en considération cet acquittement. Cela évite, dans le doute, à un opérateur à devoir acquitter plusieurs fois une fenêtre.

Un troisième état permet de signaler que les critères non prédictifs et prédictifs sont favorables à l'appontage. Ce troisième état est actif lorsque les fenêtres d'appontage sont alors suffisamment proches de l'appontage pour être prises en compte par le calculateur, c'est-à-dire qu'une limite temporelle prédéfinie permet de tester si la prédiction de la fenêtre d'appontage n'est pas trop éloignée.

Enfin un quatrième état permet de signaler que les critères prédictifs sont favorables à l'appontage mais que l'opérateur n'a pas acquitté à temps les critères non prédictifs. Dans ce dernier cas l'appontage ne pourra se faire dans la fenêtre d'appontage dont la représentation indique ce quatrième état.

Pour cela, l'invention comprend un calculateur qui évalue l'état de chacun des critères prédictifs dans le temps et en déduit un ensemble de fenêtres de durée variable durant lesquelles la validité des critères prédictifs est vérifiée.

L'évaluation des critères est réalisée par la comparaison de valeurs courantes avec des seuils prédéfinis dans le dispositif de l'invention. Ainsi, il est possible de configurer le degré de sécurité souhaité pour l'appontage en prédéfinissant des seuils plus ou moins critiques.

En revanche, si les conditions sont trop sévères pour autoriser un appontage, l'aéronef peut se maintenir en vol stationnaire et attendre une prochaine autorisation provenant du navire.

L'invention permet donc une grande adaptation aux conditions environnementales, notamment dans des variantes de l'invention il est possible de configurer le nombre de critères prédictifs à analyser par le calculateur.

Les prédictions proposées par le calculateur sont réévaluées régulièrement. Dans un mode de réalisation les critères sont réévalués toutes les secondes.

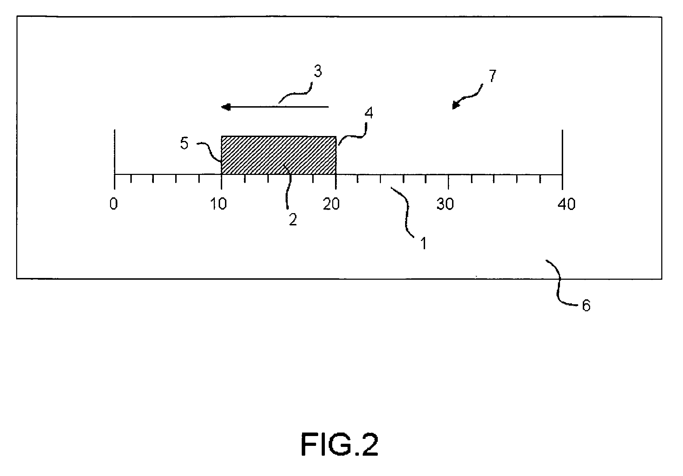

La figure 2 représente un indicateur 7 selon l'invention qui est généré dans un afficheur 6.

L'indicateur 7 comprend une échelle graduée 1 fixe et lorsque les prédictions des critères évalués par le calculateur sont réunies comme étant favorables pour l'appontage de l'aéronef alors une fenêtre 2 symbolise la durée à venir pendant laquelle l'appontage sera possible.

L'opérateur peut donc valider la consigne autorisant l'aéronef à apponter sous forme d'un acquittement permettant de choisir la fenêtre pendant laquelle l'aéronef pourra apponter sur le navire.

L'invention permet à l'opérateur de n'avoir plus qu'un seul indicateur à contrôler pour l'ensemble des critères prédictifs.

Le fait que de nombreux critères sont à valider est un inconvénient que résout l'invention. Car tous les critères prédictifs sont pris en charge par le calculateur et permet de soulager les tâches de l'opérateur.

L'opérateur peut donc se concentrer sur les critères non prédictifs comme le dégagement de la zone d'appontage afin de transmettre la consigne d'appontage. Il peut donc évaluer en minimisant les erreurs d'appréciation les critères non prédictifs engageant la séquence d'appontage de l'aéronef.

Avec la solution de l'invention, l'opérateur peut donner un acquittement dès l'apparition de la première fenêtre. Le temps de vol stationnaire au-dessus du navire est ainsi limité et les risques d'erreurs d'appréciation des critères prédictifs sont également réduits.

L'invention comprend donc un indicateur qui comprend une jauge temporelle graduée dont l'échelle est paramétrable par l'opérateur. Au sein de cette jauge, les fenêtres défilent le long de la graduation en temps réel. Elles indiquent les intervalles où l'appontage peut être réalisé.

Les intervalles formant les fenêtres prédictives sont générées à partir d'un calculateur qui permet de connaître les instants dans une période à venir où tous les critères prédictifs vérifient certaines limites prédéfinies.

La fenêtre 2 défile dans l'exemple de la figure 2 de la droite vers la gauche.

Le temps restant avant d'atteindre une fenêtre se lit à l'aide des graduations, dans l'exemple de la figure 2, le début de la fenêtre est marquée par le coté 5 de la fenêtre qui est au niveau de la graduation indiquant 10s à l'instant de la lecture. De même, on peut lire le temps correspondant à la fin de la fenêtre à l'aide du coté 4 qui est au niveau de la graduation indiquant 20s.

On comprend en lisant l'indicateur 7 que l'aéronef peut apponter dans 10s et ce pendant une durée de 10s.

Si la consigne est validée par l'opérateur, alors la fenêtre 2 sera validée et un message sera envoyé à l'aéronef pour indiquer que la procédure d'appontage peut être engagée à une certaine heure.

L'invention permet de distinguer différents statuts des fenêtres prédictives d'appontage. Par exemple, dans un mode de réalisation un code couleur permet de déterminer le statut de chacune des fenêtres.

Concernant le premier état, une première couleur, par exemple le jaune, permet de représenter une fenêtre en attente d'acquittement par l'opérateur. La fenêtre indique alors que les critères prédictifs dans la période de temps de la fenêtre sont validés par le calculateur et que les critères non prédictifs qui ne peuvent être validés que par l'opérateur ne sont pas encore acquittés. Il s'agit du premier état qui correspond à un état temporaire dans lequel la fenêtre prédictive d'appontage peut être ou peut ne pas être validée par l'opérateur.

Si l'opérateur n'acquitte pas la fenêtre, elle reste dans le même état jusqu'à une certaine heure limite permettant la validation de la fenêtre. Cette limite peut être prédéfinie, elle peut correspondre à une durée en dessous de laquelle l'aéronef n'aura plus le temps de recevoir la consigne et d'engager un appontage avant la fin de la fenêtre.

La fenêtre reste dans une représentation indiquant qu'elle est dans le premier état jusqu'à cette limite temporelle. Aucune consigne n'est envoyée à l'aéronef pour apponter jusqu'à cette limite.

Concernant le second état, une seconde couleur permet de représenter une fenêtre temporelle lorsque l'opérateur a acquitté en avance les critères non prédictifs. Cette configuration peut se produire lorsque tous les critères non prédictifs sont favorables à l'appontage et qu'à priori dans un futur proche ces critères ne sont pas amenés à évoluer. L'opérateur peut donc acquitter ces critères. Dans ce cas les fenêtres d'appontage défilant sur l'afficheur dans l'indicateur changent d'état lors de l'acquittement de l'opérateur et permettent de ce fait de rappeler à l'opérateur que l'acquittement a déjà eu lieu. Ce second état permet d'éviter qu'un opérateur acquitte plusieurs fois une fenêtre dans le doute de ne l'avoir pas fait. Ce second peut être représenté par une couleur de remplissage de la fenêtre d'appontage qui défile, il peut s'agir par exemple du bleu.

Concernant le troisième état, une troisième couleur permet de représenter une fenêtre temporelle pendant laquelle les critères prédictifs ont été évalués comme favorables à l'appontage par le calculateur et les critères non prédictifs ont été acquittés par l'opérateur. Cette couleur peut être par exemple le vert.

Dans ce dernier cas une consigne est envoyée à l'aéronef qui autorise un appontage à une heure indiquée correspondant à la période dans laquelle l'appontage est possible.

Concernant le quatrième état, une seconde couleur, telle que le gris, permet de représenter une fenêtre qui a été rejetée par l'opérateur. Ce dernier n'ayant pas acquitté les critères non-prédictifs à temps. L'aéronef ne pourra donc pas apponter au cours de cette fenêtre. Au passage de la limite précédemment définie, la fenêtre change d'état, elle est alors dans le quatrième état. Le changement d'état peut être représenté sur l'afficheur par un changement de couleur de la fenêtre d'appontage.

Dans l'exemple de la figure 2, la fenêtre où les critères prédictifs sont favorables à l'appontage se présentant n'est pas encore acquittée par l'opérateur. Cette fenêtre est encore dans le premier état pour la raison suivante : l'opérateur n'a pas acquitté la fenêtre parce que l'un des critères non prédictifs n'est pas favorable à l'appontage de l'aéronef. Par exemple, ce critère peut être : "du personnel se trouve dans la zone d'appontage".

L'invention permet donc la génération d'une jauge de temps sur laquelle défile au moins une fenêtre avec les attributs suivants :
■ un temps de début représenté par le coté 5 de la fenêtre figure 2 ;
■ un temps de fin représenté par le coté 4 de la fenêtre figure 2 ;
■ une couleur selon l'état ;

L'invention permet de mettre en oeuvre différents scénarios.

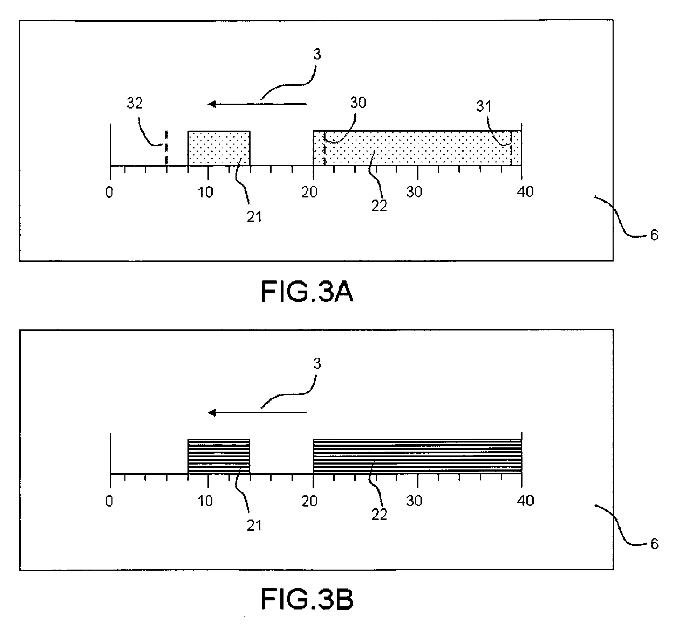

La figure 3A représente l'apparition de deux fenêtres d'appontage 21,22.

Le calculateur a fourni une première fenêtre d'appontage 21 et une seconde fenêtre d'appontage 22 dont les caractéristiques sont :
■ début de la première fenêtre dans 8 secondes et fin de la première fenêtre dans 14 secondes ;
■ début de la seconde fenêtre dans 20 secondes et fin de la seconde fenêtre dans 40 secondes.

L'opérateur n'a donné aucun acquittement des paramètres non prédictifs. Les fenêtres sont représentées de telle manière que l'opérateur visualise tout de suite l'état des fenêtres d'appontage.

Sur la figure 3A, deux fenêtres 21, 22 de taille différente apparaissent. Elles sont représentées avec une certaine couleur qui est représentée sur la figure 3A par un bloc comprenant des pointillés. Cette représentation permet de comprendre que seuls les critères prédictifs ont été acquittés. L'opérateur n'a pas encore acquitté les fenêtres 21, 22 signifiant que les critères non prédictifs n'ont pas été validés par l'opérateur ou qu'il juge par exemple qu'une fenêtre est trop courte. Il attend dans ce dernier cas la prochaine fenêtre d'appontage.

La figure 3B représente le cas de figure de la figure 3A lorsque l'opérateur a déjà acquitté les critères non prédictifs avant que les fenêtres d'appontage ne soient générées par le calculateur. Dans ce cas les fenêtres d'appontage sont représentées avec une autre couleur ou un autre motif que dans le cas de figure de la figure 3A.

L'opérateur sait alors que les critères non prédictifs ont déjà été acquittés, ce qui évite tous doutes de sa part pouvant l'amener à racquitter les critères non prédictifs.

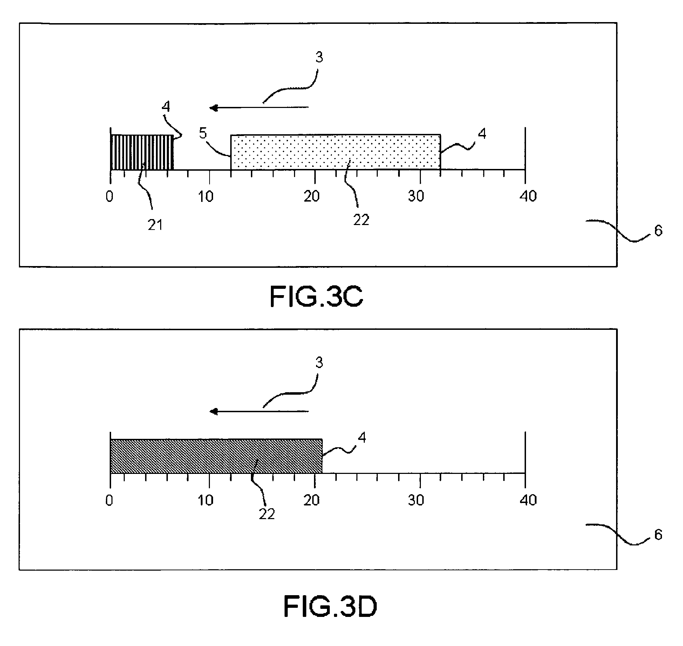

La figure 3C représente le cas de la figure 3A mais quelques secondes plus tard. La fenêtre prédictive d'appontage 21 n'a pas été acquittée par l'opérateur, elle est donc rejetée. C'est à dire qu'aucune consigne ne sera envoyée à l'aéronef autorisant l'appontage pendant la période correspondante à la fenêtre 21.

Le calculateur a fourni une première fenêtre d'appontage 21 et une seconde fenêtre d'appontage 22 dont les caractéristiques sont :
■ début de la première fenêtre dans 0 secondes et fin de la première fenêtre dans 6 secondes
■ début de la seconde fenêtre dans 12 secondes et fin de la seconde fenêtre dans 32 secondes ;

A l'instant de la figure 3C, l'opérateur n'a donné aucun acquittement pour aucune des deux fenêtres se présentant.

Dans une première variante de réalisation, il est donné la possibilité à l'opérateur d'attribuer un acquittement à l'une des fenêtres se présentant dans l'indicateur 7.

Dans une seconde variante de réalisation, l'acquittement de l'opérateur concerne la prochaine fenêtre s'affichant pour laquelle le calculateur a validé les critères prédictifs d'appontage.

Dans un mode de réalisation les fenêtres de durée trop courtes pendant lesquelles les critères favorables à un appontage sont réunis ne sont pas affichées. L'opérateur peut configurer une durée minimale pendant laquelle les critères favorables à l'appontage doivent être réunis.

Il est nécessaire que l'aéronef ait un temps minimal pour s'approcher de la zone d'appontage. L'invention permet de prendre en considération cette contrainte.

La fenêtre 21 en pointillée sur la figure 3A comporte des rayures sur la figure 3C signifiant qu'elle a changé d'état. Dans les figures, les couleurs ont été remplacés par des motifs.

Le changement d'état de la fenêtre prédictive d'appontage 21 signifie que l'opérateur n'a pas acquitté les critères non-prédictifs à temps. Passé une certaine limite, l'opérateur ne peut plus acquitter une fenêtre.

L'invention permet de définir une limite temporelle 32 au delà de laquelle, l'opérateur ne peut plus acquitter la fenêtre courante, cette limite est choisie de manière à ce que l'aéronef ait le temps de recevoir la consigne pour pouvoir l'exécuter, c'est-à-dire d'apponter. Généralement, avant de réaliser l'appontage en attendant une consigne favorable du navire, l'aéronef se positionne à un point particulier au dessus du pont en vol stationnaire prêt à commencer l'appontage, ce point est appelé point d'attente. Le point d'attente peut-être également légèrement décalé par rapport au pont par sécurité. Dans ce cas de figure, la durée moyenne pour apponter, c'est-à-dire entre le point d'attente et le point d'atterrissage est connu. Cette durée moyenne permet de configurer dans le dispositif de l'invention la limite temporelle.

Dans un exemple de réalisation, cette limite temporelle peut-être d'une durée de 6 secondes, comme représentée sur la figure 3C.

Lorsque la limite temporelle pour acquitter une fenêtre est passée, le calculateur ne permet plus de prendre en compte l'acquittement de l'opérateur. L'état de la fenêtre est donc modifié, la fenêtre passe dans un statut "refusé". Dans ce cas, même si l'opérateur donne son acquittement pour générer une consigne d'appontage, la fenêtre 21 dans la figure 3B ne pourra plus être validée. L'acquittement des critères non prédictifs de l'opérateur sera pris en compte pour une prochaine fenêtre qui passera dans le quatrième état défini précédemment.

Enfin la figure 3D représente le même cas que les figures 3A et 3B mais la fenêtre 21 est passée et n'est plus représentée. La fenêtre prédictive d'appontage 22 défile alors également. Dans ce scénario, l'opérateur a acquitté la fenêtre 22. Elle a changé d'état, sa représentation indique qu'une consigne sera envoyée à l'aéronef autorisant son appontage sur le navire.

Le calculateur a fourni une seconde fenêtre d'appontage 22 dont les caractéristiques sont à l'instant de la figure 3D: début de la seconde fenêtre dans 0 seconde et fin de la seconde fenêtre dans 20 secondes ;

L'opérateur a donné son acquittement des critères non prédictifs afin que l'aéronef entame son appontage.

La fenêtre 22, encore temporaire dans la figure 3B, a maintenant été acquittée par l'opérateur. Cette dernière est représentée de manière distincte dans l'indicateur représenté sur l'afficheur 6.

Dans ces conditions, l'aéronef peut débuter son appontage à partir du moment où l'état de la fenêtre 22 a changé de manière à ce que l'aéronef soit posé sur le pont du navire avant que le coté 4 de la fenêtre atteigne la graduation 0 de la jauge. C'est-à-dire que l'appontage débute de manière à ce que l'aéronef soit posé lorsque la graduation 0 est située dans la fenêtre d'appontage courante.

Dans un mode de réalisation, une première marge intérieure 30 de la fenêtre 22 du coté 5 et une seconde marge intérieure 31 de la fenêtre 22 du coté 4 peuvent être préconfigurées de manière à ce que l'aéronef ne se pose sur le pont à la limite du temps pendant lequel il est autorisé à apponter. Les marges 30, 31 sont représentées figure 3C.

Dans un mode d'implémentation la marge peut être d'une seconde.

L'invention comprend de ce fait de nombreux avantages, notamment elle permet de regrouper tous les critères prédictifs dans un unique indicateur qui comprend des symboles temporels.

Chaque symbole représente avantageusement une durée pendant laquelle les critères prédictifs sont favorables à un appontage. En outre, chaque symbole correspondant à une durée appelée fenêtre prédictive d'appontage. Il est représenté en temps réel sur une jauge temporelle graduée. Cette représentation permet à un opérateur d'agir en conscience tout en contrôlant et surveillant les critères non prédictifs.

L'invention permet donc de sécuriser les phases d'appontage en garantissant que le contrôle de l'opérateur est redondant pour les critères prédictifs d'un contrôle d'un calculateur.

## Revendications

1. Dispositif d'aide à l'appontage d'un aéronef (10) à voilure tournante sans pilote sur une station mobile (11), appelée navire, aéronef étant destiné à être contrôlé à distance à partir dudit dispositif, le dispositif comprenant des moyens (14) de réception de données provenant de l'aéronef, notamment des attitudes de l'aéronef et un calculateur, l'aéronef étant en vol stationnaire prêt à apponter, la décision d'appontage devant être prise sous certaines conditions comprenant un premier ensemble de critères prédictifs et un second ensemble de critères non prédictifs, les critères prédictifs correspondant à des paramètres mesurés par le calculateur et dont la valeur peut être extrapolée dans un futur proche, lesdits critères prédictifs concernant notamment les attitudes de l'aéronef et du navire, l'amplitude et la vitesse de la houle, l'intensité et la direction du vent sur le pont du navire, les critères non prédictifs correspondant à des paramètres non mesurables par le calculateur, lesdits critères non prédictifs concernant notamment le dégagement dudit pont, le dispositif comprenant en outre un afficheur (5)
**caractérisé en ce que** le calculateur permet de délivrer au moins un indicateur temporel (7) indiquant que les critères prédictifs sont favorables ou non à un appontage, l'afficheur (6) permettant de représenter l'indicateur dans un premier état lorsque les critères prédictifs sont favorables à l'appontage.

2. Dispositif d'aide à l'appontage d'un aéronef selon la revendication 1, **caractérisé en ce que** le dispositif comprend des moyens d'acquittement permettant à un opérateur d'acquitter les critères non prédictifs, l'indicateur temporel (7) généré préalablement par le calculateur étant représenté dans un second état lorsque l'opérateur acquitte les critères non prédictifs.

3. Dispositif d'aide à l'appontage d'un aéronef selon l'une quelconque des revendications 1 à 2, **caractérisé en ce que** l'indicateur temporel (7) comprend au moins une fenêtre (2) défilant sur une jauge (1) graduée dans le temps.

4. Dispositif d'aide à l'appontage d'un aéronef selon la revendication 3, **caractérisé en ce qu'**une limite temporelle (5) est définie de telle manière qu'une fenêtre (2) glissant au-delà de cette limite temporelle et dont le temps restant de la fenêtre ne permet plus l'appontage de l'aéronef ne permet plus à l'opérateur d'acquitter les critères non prédictifs pour cette fenêtre.

5. Dispositif d'aide à l'appontage d'un aéronef selon la revendication 4, **caractérisé en ce que** l'indicateur temporel (7) est représenté dans un troisième état lorsque la fenêtre (2) franchie la limite temporelle alors que l'opérateur a acquitté les critères non prédictifs.

6. Dispositif d'aide à l'appontage d'un aéronef selon la revendication 4, **caractérisé en ce que** l'indicateur temporel (7) est représenté dans un quatrième état lorsque la fenêtre (2) franchie la limite temporelle alors que l'opérateur n'a pas acquitté les critères non prédictifs.

7. Dispositif d'aide à l'appontage d'un aéronef selon l'une quelconque des revendications 1 à 5, **caractérisé en ce que** les critères prédictifs comprennent une valeur correspondant au dépassement d'au moins un écart maximal autorisé d'une attitude du navire.

8. Dispositif d'aide à l'appontage d'un aéronef selon l'une quelconque des revendications 1 à 5, **caractérisé en ce que** les critères prédictifs comprennent une valeur correspondant au dépassement d'au moins un écart maximal autorisé d'une attitude de l'aéronef.

9. Dispositif d'aide à l'appontage d'un aéronef selon l'une quelconque des revendications 1 à 5, **caractérisé en ce que** les critères prédictifs comprennent une valeur correspondant au dépassement d'un écart maximal autorisé de l'amplitude de la houle.

10. Dispositif d'aide à l'appontage d'un aéronef selon l'une quelconque des revendications 1 à 5, **caractérisé en ce que** les critères prédictifs comprennent une valeur correspondant au dépassement d'un écart maximal autorisé de l'intensité du vent au niveau du pont.

11. Dispositif d'aide à l'appontage d'un aéronef selon l'une quelconque des revendications 1 à 5, **caractérisé en ce que** les critères prédictifs comprennent une valeur correspondant à la direction du vent au niveau du pont.

12. Dispositif d'aide à l'appontage d'un aéronef selon l'une quelconque des revendications 1 à 5, **caractérisé en ce que** les critères non prédictifs comprennent le constat que la zone du pont est dégagée.

13. Aéronef comprenant un dispositif d'aide à l'appontage pour aéronef selon l'une quelconque des revendications 1 à 11, **caractérisé en ce que** l'aéronef comprend des moyens de réception des données générées par le calculateur du navire et des moyens d'affichage permettant d'afficher l'indicateur temporel.

## Claims

1. A device for assisting the landing of a pilotless rotorcraft (10) on a mobile station (11), referred to as a ship, said aircraft being designed to be remotely controlled using said device, said device comprising means (14) for receiving data originating from said aircraft, notably the attitudes of said aircraft, and a computer, said aircraft being in hovering flight ready to land, the decision to land having to be taken subject to certain conditions that comprise a first set of predictive criteria and a second set of non-predictive criteria, said predictive criteria corresponding to parameters measured by said computer and the value of which can be extrapolated in the near future, said predictive criteria notably relating to the attitudes of said aircraft and of said ship, the amplitude and the speed of the swell, the strength and the direction of the wind on the deck of said ship, said non-predictive criteria corresponding to parameters that cannot be measured by said computer, said non-predictive criteria notably relating to the clearance of said deck, said device further comprising a display (6),
**characterised in that** said computer allows at least one time indicator (7) to be provided that indicates that the predictive criteria are favourable or unfavourable for landing, said display (6) allowing the indicator to be shown in a first state when the predictive criteria are favourable for landing.

2. The device for assisting the landing of an aircraft according to claim 1, **characterised in that** said device comprises acknowledgement means that allow an operator to acknowledge the non-predictive criteria, with the time indicator (7) that has previously generated by said computer being shown in a second state when the operator acknowledges the non-predictive criteria.

3. The device for assisting the landing of an aircraft according to any one of claims 1 to 2, **characterised in that** said time indicator (7) comprises at least one window (2) that scrolls through a time graduated gauge (1).

4. The device for assisting the landing of an aircraft according to claim 3, **characterised in that** a time limit (5) is defined so that a window (2) that goes beyond this time limit, and for which the remaining time in the window no longer allows the landing of the aircraft, no longer allows the operator to acknowledge the non-predictive criteria for this window.

5. The device for assisting the landing of an aircraft according to claim 4, **characterised in that** said time indicator (7) is shown in a third state when said window (2) goes over the time limit whilst the operator has acknowledged the non-predictive criteria.

6. The device for assisting the landing of an aircraft according to claim 4, **characterised in that** said time indicator (7) is shown in a fourth state when said window (2) goes over the time limit whilst the operator has not acknowledged the non-predictive criteria.

7. The device for assisting the landing of an aircraft according to any one of claims 1 to 5, **characterised in that** the predictive criteria include a value that corresponds to the exceeding of at least one authorised maximum deviation of an attitude of said ship.

8. The device for assisting the landing of an aircraft according to any one of claims 1 to 5, **characterised in that** the predictive criteria include a value that corresponds to the exceeding of at least one authorised maximum deviation of an attitude of said aircraft.

9. The device for assisting the landing of an aircraft according to any one of claims 1 to 5, **characterised in that** the predictive criteria include a value that corresponds to the exceeding of at least one authorised maximum deviation of the amplitude of said swell.

10. The device for assisting the landing of an aircraft according to any one of claims 1 to 5, **characterised in that** the predictive criteria include a value that corresponds to the exceeding of an authorised maximum deviation of the strength of the wind on the deck.

11. The device for assisting the landing of an aircraft according to any one of claims 1 to 5, **characterised in that** the predictive criteria include a value that corresponds to the direction of the wind on the deck.

12. The device for assisting the landing of an aircraft according to any one of claims 1 to 5, **characterised in that** the non-predictive criteria include finding that the zone of the deck is clear.

13. An aircraft comprising a device for assisting the landing of an aircraft according to any one of claims 1 to 11, **characterised in that** said aircraft comprises means for receiving data generated by the computer of the ship and display means for displaying the time indicator.

## Patentansprüche

1. Vorrichtung zum Helfen beim Landen eines pilotlosen Drehflügelflugzeugs (10) auf einer mobilen Station (11), Schiff genannt, wobei das Flugzeug so ausgelegt ist, dass es mit der Vorrichtung ferngesteuert werden kann, wobei die Vorrichtung Mittel (14) zum Empfangen von dem Flugzeug stammenden Daten insbesondere über die Lagen des Flugzeugs und einen Computer umfasst, wobei das Flugzeug landebereit schwebt, wobei die Entscheidung zum Landen vorbehaltlich bestimmter Bedingungen zu treffen ist, die einen ersten Satz von prädiktiven Kriterien und einen zweiten Satz von nicht prädiktiven Kriterien umfassen, wobei die prädiktiven Kriterien Parametern entsprechen, die vom Computer gemessen werden und deren Wert in naher Zukunft extrapoliert werden kann, wobei die prädiktiven Kriterien insbesondere die Lagen des Flugzeugs und des Schiffs, die Amplitude und die Geschwindigkeit des Seegangs, Stärke und Richtung des Windes an Deck des Schiffs betreffen, wobei die nicht prädiktiven Kriterien Parametern entsprechen, die mit dem Computer nicht gemessen werden können, wobei die nicht prädiktiven Kriterien insbesondere die Freiheit des Decks betreffen, wobei die Vorrichtung ferner ein Display (6) umfasst,
**dadurch gekennzeichnet, dass** es der Computer ermöglicht, wenigstens einen Zeitindikator (7) zu geben, der angibt, ob die prädiktiven Kriterien für eine Landung günstig oder ungünstig sind, wobei das Display (6) die Anzeige des Indikators in einem ersten Zustand zulässt, wenn die prädiktiven Kriterien für die Landung günstig sind.

2. Vorrichtung zum Helfen beim Landen eines Flugzeugs nach Anspruch 1, **dadurch gekennzeichnet, dass** die Vorrichtung Bestätigungsmittel umfasst, die es einem Bediener gestatten, die nicht prädiktiven Kriterien zu bestätigen, wobei der Zeitindikator (7), der zuvor von dem Computer erzeugt wurde, in einem zweiten Zustand dargestellt wird, wenn der Bediener die nicht prädiktiven Kriterien bestätigt.

3. Vorrichtung zum Helfen beim Landen eines Flugzeugs nach einem der Ansprüche 1 bis 2, **dadurch gekennzeichnet, dass** der Zeitindikator (7) wenigstens ein Fenster (2) umfasst, das über ein Messgerät (1) mit Zeiteinteilung läuft.

4. Vorrichtung zum Helfen beim Landen eines Flugzeugs nach Anspruch 3, **dadurch gekennzeichnet, dass** eine Zeitgrenze (5) definiert ist, so dass, wenn ein Fenster (2) über diese Zeitgrenze hinaus geht und seine Restzeit keine Landung des Flugzeugs mehr zulässt, es dem Bediener nicht mehr gestattet wird, die nicht prädiktiven Kriterien für dieses Fenster zu bestätigen.

5. Vorrichtung zum Helfen beim Landen eines Flugzeugs nach Anspruch 4, **dadurch gekennzeichnet, dass** der Zeitindikator (7) in einem dritten Zustand dargestellt wird, wenn das Fenster (2) die Zeitgrenze überschreitet, wenn der Bediener die nicht prädiktiven Kriterien bestätigt hat.

6. Vorrichtung zum Helfen beim Landen eines Flugzeugs nach Anspruch 4, **dadurch gekennzeichnet, dass** der Zeitindikator (7) in einem vierten Zustand dargestellt wird, wenn das Fenster (2) die Zeitgrenze überschreitet, wenn der Bediener die nicht prädiktiven Kriterien nicht bestätigt hat.

7. Vorrichtung zum Helfen beim Landen eines Flugzeugs nach einem der Ansprüche 1 bis 5, **dadurch gekennzeichnet, dass** die prädiktiven Kriterien einen Wert beinhalten, der dem Überschreiten von wenigstens einer maximal zulässigen Abweichung einer Lage des Schiffs entspricht.

8. Vorrichtung zum Helfen beim Landen eines Flugzeugs nach einem der Ansprüche 1 bis 5, **dadurch gekennzeichnet, dass** die prädiktiven Kriterien einen Wert beinhalten, der dem Überschreiten von wenigstens einer maximal zulässigen Abweichung einer Lage des Flugzeugs entspricht.

9. Vorrichtung zum Helfen beim Landen eines Flugzeugs nach einem der Ansprüche 1 bis 5, **dadurch gekennzeichnet, dass** die prädiktiven Kriterien einen Wert beinhalten, der dem Überschreiten von wenigstens einer maximal zulässigen Abweichung der Amplitude des Seegangs entspricht.

10. Vorrichtung zum Helfen beim Landen eines Flugzeugs nach einem der Ansprüche 1 bis 5, **dadurch gekennzeichnet, dass** die prädiktiven Kriterien einen Wert beinhalten, der dem Überschreiten einer maximal zulässigen Abweichung der Stärke des Windes an Deck entspricht.

11. Vorrichtung zum Helfen beim Landen eines Flugzeugs nach einem der Ansprüche 1 bis 5, **dadurch gekennzeichnet, dass** die prädiktiven Kriterien einen Wert enthalten, der der Richtung des Windes an Deck entspricht.

12. Vorrichtung zum Helfen beim Landen eines Flugzeugs nach einem der Ansprüche 1 bis 5, **dadurch gekennzeichnet, dass** die nicht prädiktiven Kriterien die Feststellung beinhalten, dass die Zone des Decks frei ist.

13. Flugzeug, das eine Vorrichtung zum Helfen beim Landen eines Flugzeugs nach einem der Ansprüche 1 bis 11 umfasst, **dadurch gekennzeichnet, dass** das Flugzeug Mittel zum Empfangen von Daten umfasst, die von dem Computer des Schiffs erzeugt werden, und Anzeigemittel zum Anzeigen des Zeitindikators.
